# EUROPÄISCHE PATENTSCHRIFT

(11) **EP 0 834 178 B1**
(45) Veröffentlichungstag und Bekanntmachung des Hinweises auf die Patenterteilung: **01.09.1999**
(21) Anmeldenummer: 96916006.8
(22) Anmeldetag: 10.06.1996
(51) Int. Cl.: H01B 13/14, H01B 13/24, B29C 47/10, B29C 45/10, B29C 31/02

(54) **VERFAHREN ZUR HERSTELLUNG EINER ISOLIERUNG FÜR HOCH- UND HÖCHSTSPANNUNGSKABEL UND ANLAGE ZUR DURCHFÜHRUNG DIESES VERFAHRENS**
METHOD OF MANUFACTURING INSULATION MATERIAL FOR HIGH AND VERY HIGH TENSION CABLES, AND AN INSTALLATION FOR CARRYING OUT THE METHOD
PROCEDE DE FABRICATION D'UNE ISOLATION DE CABLES HAUTE ET TRES HAUTE TENSION ET INSTALLATION CORRESPONDANTE

(30) Priorität: 21.06.1995 DE 19523728
(43) Veröffentlichungstag der Anmeldung: 08.04.1998
(73) Patentinhaber: PIRELLI CAVI E SISTEMI S.p.A., 20126 Milano (IT)
(72) Erfinder: TRIEBSCH, Ulrich, D-13629 Berlin (DE); WEINAND, Robert, D-10555 Berlin (DE); GÄRTLEIN, Martin, D-10787 Berlin (DE); HUTH, Otto, D-14612 Falkensee (DE); BENDER, Harald, D-10711 Berlin (DE); FUNKE, Peter, D-13465 Berlin (DE); HEISINGER, Klaus, D-12209 Berlin (DE)
(74) Vertreter: HOFFMANN - EITLE
(86) Internationale Anmeldenummer: DE9601040
(87) Internationale Veröffentlichungsnummer: WO9701176

(56) Entgegenhaltungen:
- EP-A- 0 279 927
- EP-A- 0 505 618
- DE-A- 2 754 877

## Beschreibung

Die Erfindung liegt auf dem Gebiet der Fertigungstechnik für elektrische Kabel und ist bei der Herstellung von Hoch- und Höchstspannungskabeln anzuwenden, deren Isolierung aus einem vernetzten Polymer, insbesondere aus vernetztem Polyäthylen besteht.

Auf dem Gebiet der Übertragung großer elektrischer Leistungen mittels in Erde verlegter Kabel hat sich mit der zu Ende gehenden Entwicklung von Kabeln mit Ölgetränkter Papierisolierung die Entwicklung zunehmend dem Einsatz von extrudierbaren Kunststoffen wie Polyäthylen, vernetzem Polyäthylen und Äthylen-Propylen-Copolymeren zugewandt. Kabel mit einer Isolierung aus vernetztem Polyäthylen sind inzwischen in den Spannungsebenen 110 kV, 220 kV und 380/400 kV zum Einsatz gekommen. Die Entwicklung auf dem Gebiet des Isoliermaterials zielt dabei darauf ab, bei einer Beanspruchungsdauer von 40 Jahren eine möglichst hohe Wechselspannungsfestigkeit zu erreichen, um mit möglichst geringer Wanddicke der Isolierung arbeiten zu können; beispielsweise sind etwa 20 kV/mm bei 220 kV erreichbar, was zu einer Isolierdicke von 24 mm führt. Voraussetzung für derartige elektrische Werte ist eine möglichst große Reinheit des Isoliermaterials, d.h. eine Begrenzung der Größe von Fremdkörpern auf höchstens 50 µm und ein Feuchtegehalt der Isolierung von max. etwa 10 bis 30 ppm. Der niedrige Feuchtegehalt kann durch eine "trockene" Vernetzung gewährleistet werden, für deren Durchführung ein elektrisch geheiztes Rohr verwendet wird, dessen Innendurchmesser praktisch dem Außendurchmesser der Kabelader entspricht. Dem Vernetzungsrohr unmittelbar vorgeschaltet ist eine Extrusionseinrichtung, die aus einem Spritzkopf mit je einem Extruder für das Isoliermaterial und das Material der inneren und der äußeren Leitschicht besteht. Der Extrusionseinrichtung ist eine Einrichtung zur Zuführung des zu isolierenden elektrischen Leiters vorgeschaltet ist. - Die Begrenzung der Größe von Fremdkörpern im Isoliermaterial wird zum einen durch ein Lieferzertifikat des Compoundherstellers und zum anderen durch Maßnahmen bei der Verarbeitung des gelieferten Polymergranulats gewährleistet. Zu diesen Maßnahmen gehören der Einsatz eines Windsichters und eines Magnetscheiders zur Ausscheidung gegebenenfalls im Transportsystem vorhandener mikroskopischer Fremdstoffpartikel und der Einsatz eines Siebpaketes vor dem Spritzkopf des Extruders. Dies bedeutet, daß der eigentlichen Förderstrecke für das Polymergranulat von dem das Polymergranulat enthaltenden Gebinde des Zulieferers über Windsichter und Magnetscheider und eine oder mehrere Rohrstrecken bis zum Einfülltrichter des Extruders besondere Beachtung gewidmet wird. Die Wirksamkeit der hierbei ergriffenen Maßnahmen hängt dabei auch von der Ausgestaltung der zur Reinhaltung des Polymergranulats eingesetzten Vorrichtungen ab (Zeitschrift "etz", 1980,Heft 25, Seiten 1374; Zeitschrift "Brown Boveri Technik", 10-86, Seiten 598 bis 602; Zeitschrift "Elektrizitätswirtschaft", 1991, Heft 11, Seiten 589 bis 598; Zeitschrift "Kunststoffe", 1992, Heft 12, Seite 1318. Zeitschrift "etz", 1994, Heft 22/23, Seite 1312).

Ausgehend von einem Verfahren mit den Merkmalen des Oberbegriffes des Patentanspruches 1 und von einer Anlage mit den Merkmalen des Oberbegriffes des Patentanspruches 2 liegt der Erfindung die Aufgabe zugrunde, die Verarbeitung von hochreinem Polymergranulat so auszugestalten, daß die hergestellte Isolierung eine gleichwertige Reinheit wie das angelieferte Polymergranulat aufweist.

Zur Lösung dieser Aufgabe ist gemäß der Erfindung vorgesehen, daß das Polymermaterial auf dem gesamten Förderweg vom Vorratsraum für das angelieferte Gebinde bis zur Ausformung als Kabelisolierung mittels einer auf Luftreinheit kontrollierten Umgebung gegen den Zutritt von Verunreinigungen abgeschirmt wird, daß das Polymergranulat im Bereich der Förderstrecke im wesentlichen vertikal von oben nach unten gefördert und dabei dosiert in die Förderstrecke eingegeben wird, in der das Polymergranulat zunächst durch den Windsichter und danach durch den Magnetscheider geführt wird, und daß das Polymergranulat dem Einfülltrichter des Extruders außermittig zugeführt wird, um bei einem Wechsel der Extruderschnecke die Förderstrecke für das Polymergranulat im Bereich der Auslaßöffnung des Einfülltrichters absperren und eine zweite Förderstrecke für die Zuführung von Reinigungsgranulat eröffnen zu können. - Zur Durchführung dieser Maßnahmen ist eine Extrusionsanlage geeignet, bei der zunächst der gesamte Förderweg und der Extruder in einem Reinraum der Klasse 100 000 angeordnet sind, - wobei der Eintrittsbereich der eigentlichen Förderstrecke und der Extrusionsbereich zusätzlich als Reinraum bzw. Reinzone der Klasse 1 000 ausgebildet sein können - , bei der weiterhin der Eintrittsbereich der eigentlichen Förderstrecke, der Windsichter, der Magnetscheider und die Rohrstrecke oberhalb des Einfülltrichters des Extruders turmartig übereinander angeordnet sind, wobei zwischen der Eintrittsöffnung der Förderstrecke und dem Windsichter ein Zwischenbehälter und eine dem Zwischenbehalter nachgeordnete Dosiereinrichtung angeordnet sind, der Magnetscheider mehrere nebeneinander angeordnete, vertikal ausgerichtete Scheideelemente aufweist, die jeweils aus einem schachtartigen Gehäuseteil bestehen, in dem wenigstens drei Magnetstäbe mit Abstand übereinander angeordnet sind, und der Einfülltrichter einen außermittig angeordneten Zuführstutzen für das Polymergranulat, ein mittig angeordnetes, axial verschiebbares Einfüllrohr für Reinigungsgranulat und einen mittig angeordneten, axial verschiebbaren Verschlußstopfen zum Verschließen der Austrittsöffnung des Einfülltrichters aufweist. An die Reinzone für den Extrusionsbereich kann sich ein Reinraum der Klasse 100 000 anschließen, in dem sich Reinigungseinrichtungen für Schnecke und Spritzkopf des Extruders befinden.

Die gemäß der Erfindung vorgesehenen Maßnahmen gewährleisten
- eine wirksame Abschottung des Verarbeitungsweges für das Polymergranulat gegen Verunreinigungen von außen,
- einen möglichst kurzen Förderweg für das Polymergranulat in Verbindung mit möglichst wenig Reibungsflächen und damit möglichst wenig Abrieb an der Wandung des Förderweges,
- ein rieselndes Durchlaufen des Förderweges und damit sowohl im Bereich des Windsichters als auch im Bereich des Magnetscheiders einen wirksamen Zugriff zu Fremdkörpern im Polymergranulat und
- eine gegenseitige Abschottung der beiden Förderwege für das Polymergranulat und das Reinigungsgranulat auch bei einem Wechsel von einem Förderweg zum anderen.

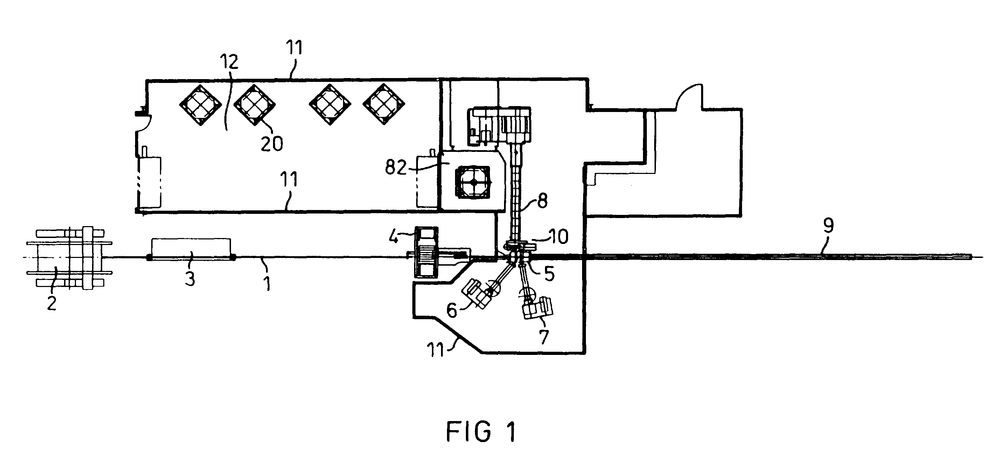

Die für die Ausgestaltung eines "sauberen" Förderweges bevorzugt vorgesehenen Maßnahmen, wie sie auch in den Patentansprüchen 4 bis 6 aufgeführt sind, werden anhand eines in den Figuren 1 bis 8 dargestellten Ausführungsbeispieles einer Extrusionsanlage erläutert, die zur Durchführung des neuen Verfahrens geeignet ist. Dabei zeigen
- Figuren 1 und 2: eine schematische Darstellung der Gesamtanlage in einem Grundriß und einer Seitenansicht,
- Figur 3: eine Prinzipdarstellung des Förderweges,
- Figur 4: den Eintrittsbereich der eigentlichen Förderstrecke,
- Figuren 5 und 6: eine schematische Darstellung des Magnetscheiders,
- Figur 7: den Zuführungstrichter am Extruder und
- Figur 8: den Bereich der Austrittsöffnung des Zuführungstrichters.

Figur 1 zeigt den Grundriß einer Anlage, mit der zur späteren Herstellung eines Hochspannungskabels auf einen elektrischen Leiter eine hochspannungsfeste Kunststoffisolierung aufgebracht wird. Hierzu wird ein elektrischer Leiter 1 mit Hilfe eines Abzuges 3 von einer Kabeltrommel 2 abgezogen und über eine Vorrichtung 4 zum Aufheizen des Leiters einem Spritzkopf 5 zugeführt. Bei diesem Spritzkopf handelt es sich um einen sogenannten Drei-fach Spritzkopf, über den gleichzeitig eine innere Leitschicht, die eigentliche Isolierung und eine äußere Leitschicht auf den Leiter aufgebracht werden. Hierzu sind dem Spritzkopf 5 zwei Extruder 6 und 7 zum Aufbringen der Leitschichten und ein Extruder 8 zum Aufbringen der Isolierschicht zugeordnet. Im Anschluß an den Spritzkopf 5 ist eine horizontale Vernetzungsstrecke 9 in Form eines beheizten Vernetzungsrohres angeordnet.

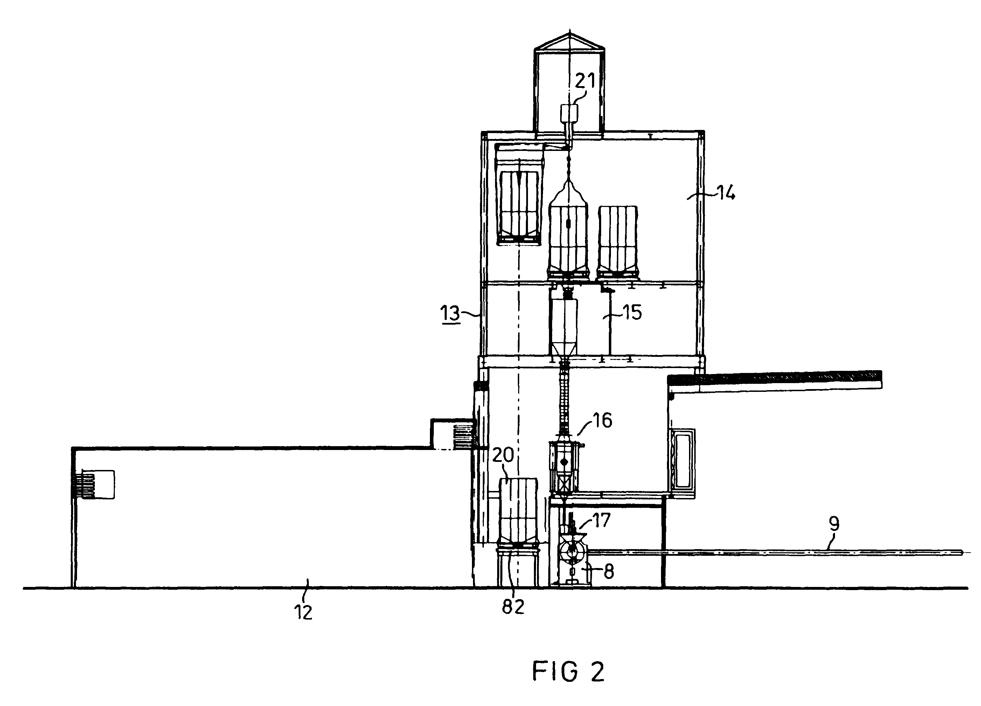

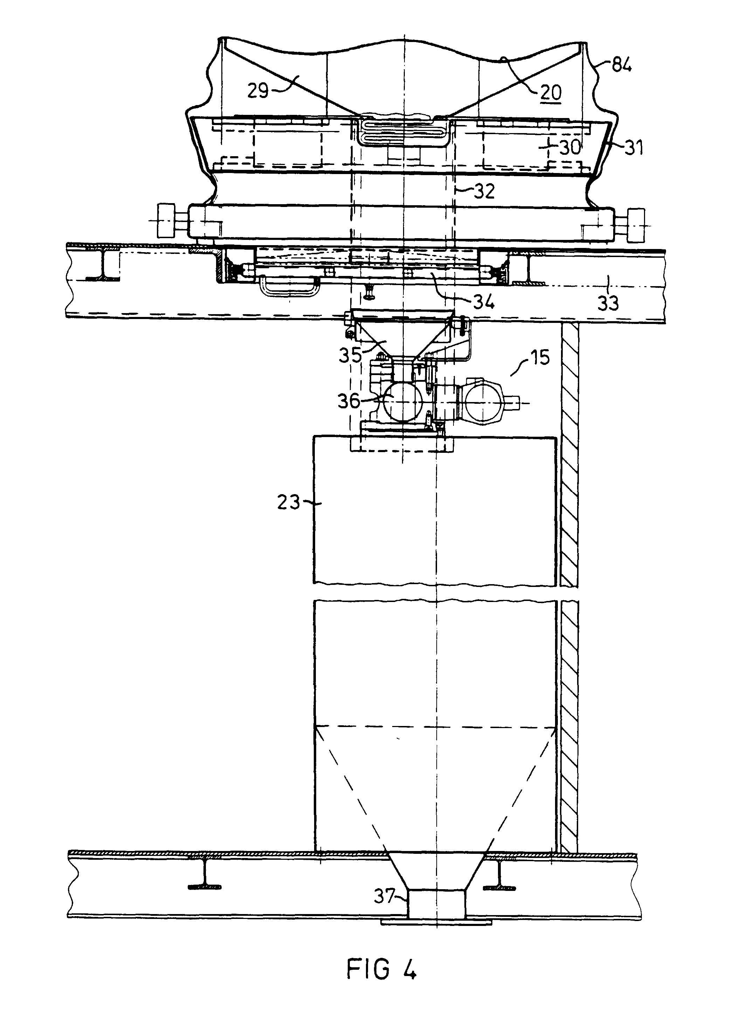

Der Extrusionsbereich 10 und daran angrenzende Bereiche sind gegenüber der Umgebung mit Hilfe von Wänden 11 und entsprechenden Decken hermetisch abgeschlossen, um innerhalb des so begrenzten Raumes mit Hilfe einer Belüftungsanlage (Erzeugung eines leichten Überdruckes) und entsprechender Filter eine Luftreinheit der Klasse 100 000 (maximal 700 freischwebende Makroteilchen mit Teilchengröße 5 µm und maximal 100 000 freischwebende Makroteilchen mit einer Teilchengröße 0,5 µm in 1 Kubikfuß (ca. 28 l) Luftvolumen) gewährleisten zu können. Zu dem gegenüber der Umgebung abgeschlossenen Bereich gehört gemäß Figur 2 auch ein turmartiger Raum 13, der vertikal oberhalb des Extruders 8 angeordnet ist. - Innerhalb des durch die Wände 11 begrenzten Raumes sind noch zwei besondere Bereiche geschaffen, in denen eine Luftreinheit der Klasse 1000 (max. 7 Teilchen/5µm; max 1 000 Teilchen/0,5 µm in 1 Kubikfuß (ca. 28 l) Luftvolumen) gewährleistet ist. Dies ist zum einen der Raum 15, dessen Funktion weiter unten anhand der Figur 4 erläutert wird, und der in unmittelbarer Umgebung des Spritzkopfes befindliche Extrusionsbereich 10. Während der Raum 15 gegenüber dem übrigen Innenraum abgeschottet ist, wird im Extrusionsbereich 10 eine Reinzone durch Anwendung eines gleichgerichteten Luftstromes (laminare Strömung) gewährleistet.

Der durch die Wände 11 begrenzte Reinraum umfaßt außer dem Extrusionsbereich weiterhin einen Vorratsraum 12, in dem das von einem Kunststoffhersteller angelieferte Polymergranulat für die Herstellung der Kabelisolierung in Form von Gebinden 20 abgestellt wird. Diese Gebinde werden nach ihrer Reinigung durch eine dicht verschließbare Wand hindurch auf eine Plattform 82 gestellt und von dort - gemäß Figur 2 - mittels einer Krananlage 21 auf die obere Ebene des turmartigen Raumes 13 transportiert.

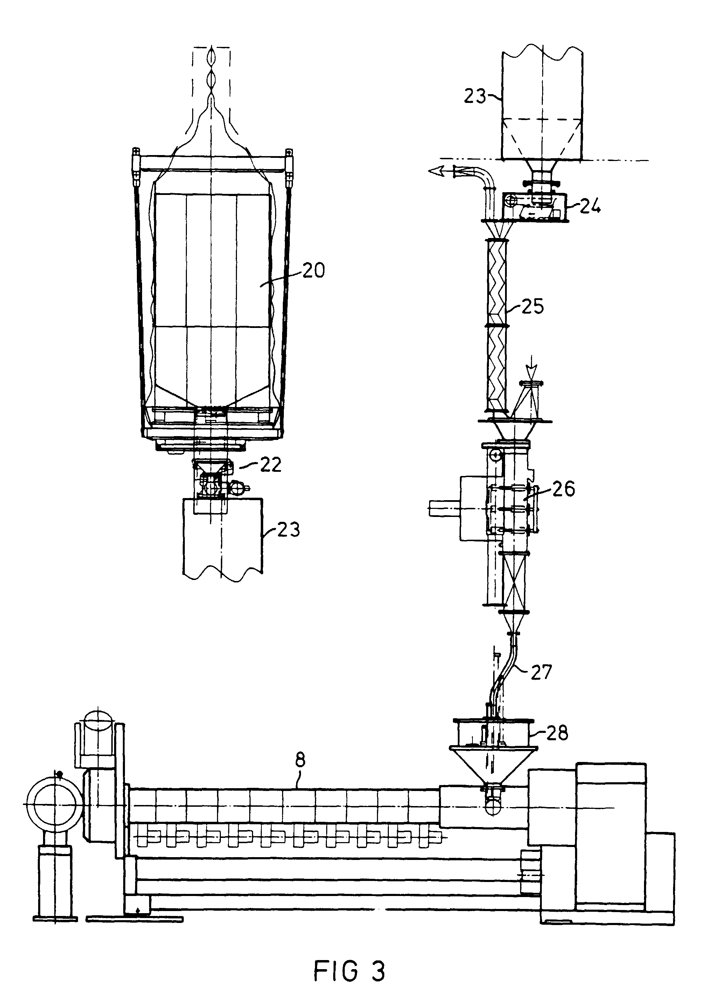

Der turmartige Raum 13 ist gemäß Figur 2 in mehrere vertikal übereinanderliegende Bereiche eingeteilt, nämlich den Beschickungsbereich 14, den Eintrittsbereich 15 für die eigentliche Förderstrecke, den Reinigungsbereich 16 und den Bereich 17, in dem das Polymergranulat aus dem Reinigungsbereich dem Extruder 8 zugeführt wird. Dieser turmartige Bereich, der die eigentliche Förderstrecke für das Polymergranulat darstellt, ist in Figur 3 schematisch hervorgehoben. Gemäß Figur 3 ist das mit dem Hebezeug nach oben beförderte Gebinde 20 mit einem Bodenauslaß versehen. An den Auslaßbereich 22 schließt ein Zwischenbehälter 23 an, in den das Gebinde 20 laufend entleert wird. Am Bodenauslaß des Zwischenbehälters 23 befindet sich eine Dosiervorrichtung 24, die aus einem handelsüblichen Vibrationsförderer (z.B. der Fa. AEG, DE; Stand der Technik z.B. DD 257.737/EP 0 278 725) besteht. Mittels dieser Dosiervorrichtung wird das Polymergranulat einem handelsüblichen Windsichter (z.B. Fa. Alpine AG, Augsburg, DE; Stand der Technik: US 1,861,248/DE 26 08 721, Fig. 1/DE-U 80 08 484) zugeführt, in dem das Polymergranulat entgegen einem Luftstrom nach unten fällt. Anschließend durchrieselt das Polymergranulat einen Magnetscheider 26 und wird vom Ausgang des Magnetscheiders über ein flexibles Rohr 27 dem Einfülltrichter des Extruders 8 zugeführt.

Figur 4 zeigt den sensiblen Eintrittsbereich der eigentlichen Förderstrecke. Das Gebinde 20, bei dem es sich um einen Pappbehalter mit einem innenliegenden Foliensack handelt, ist auf einer Palette 30 angeordnet, die ihrerseits in einen tassenartigen Untersatz 31 gestellt ist. Gebinde 20 und Tasse 31 sind in eine Schlauchfolie 84 eingehüllt. Palette 30 und Tasse 31 sind mit einem mittigen Durchlaß 32 versehen, der einen Zugang zu einem gefalteten Schlauchteil des Foliensackes 29 ermöglicht. - Die Tasse 31 steht auf einem Zwischenboden 33, der mit einer verschließbaren Öffnung 34 versehen ist. Unterhalb dieser Öffnung 34 ist ein Trichter 35 angeordnet, auf den das Ende des gefalteten Schlauchteiles des Foliensackes 29 aufgesetzt werden kann. Der Trichter 35 führt zu einem Kugelventil 36, das den Zugang zum Zwischenbehälter 23 darstellt. Im Bereich des Trichters 35 ist eine Absaugung angeordnet, um bei nicht angeschlossenem Foliensack 29 eine Ablagerung von Verunreinigungen im Bereich des Trichters zu verhindern. - Bei leergelaufenem Gebinde 20 wird zunächst das Ventil 36 geschlossen, bevor das schlauchförmige Teil des Foliensackes 29 vom Trichter 35 gelöst wird.

Der Zwischenbehälter 23 geht am unteren Ende trichterförmig in einen Anschlußstutzen 37 über, an den sich die Dosiervorrichtung 24 mit dem nachgeschalteten Windsichter 25 gemäß Figur 3 anschließt.

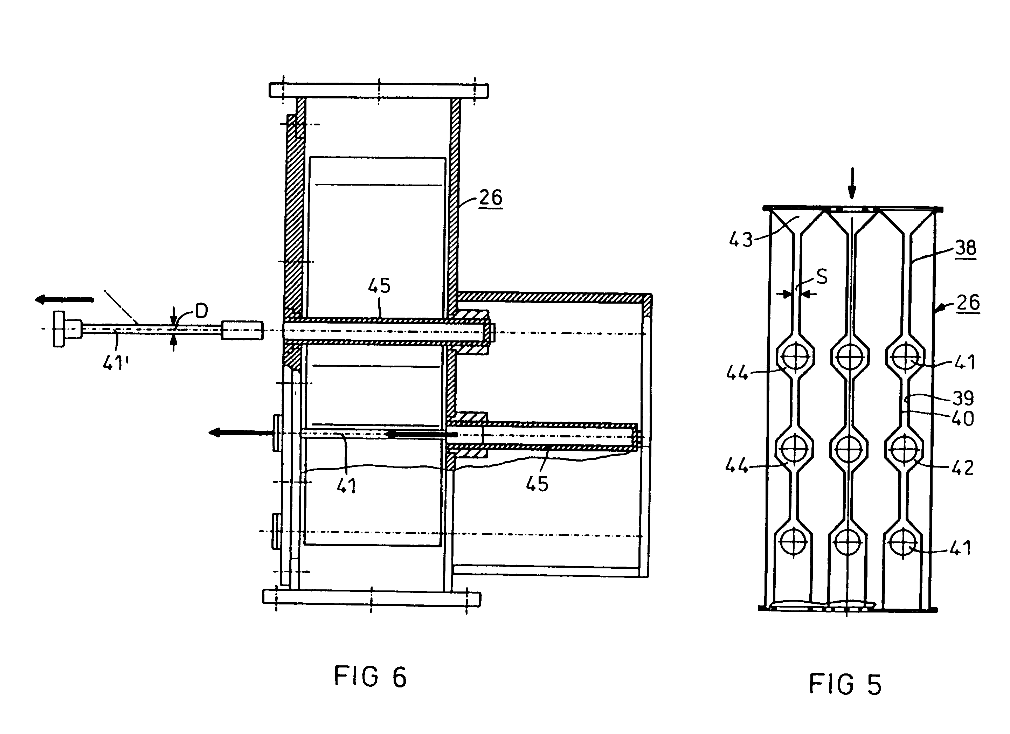

Figur 5 zeigt in schematischer Darstellung den inneren Aufbau des Magnetscheiders 26. Innerhalb eines Gehäuses sind drei Scheideelemente 38 kaskadenartig nebeneinander angeordnet. Jedes Scheideelement besteht aus zwei Leitblechen 39 und 40, die zwischen sich einen Fallschacht bilden. Im Zuge jedes Fallschachtets sind drei Magnetstabe (Ausgestaltung ähnlich DE 32 18 791 A1, Fig. 2 mit abwechselnd angeordneten Permanentmagneten und Polscheiben) mit Abstand übereinander angeordnet, wobei die Leitbleche 39 und 40 im Bereich jedes Magenetstabes 41 eine Durchgangskammer 42 bilden. Dadurch ist oberhalb jedes Magnetstabes ein kanalartiger Schütttrichter 43 bzw. 44 gebildet. - Durchmesser der Magnetstabe und Breite der Fallschächte sind so aufeinander abgestimmt, daß die Magnetstäbe bzw. die sie umgebenden Abstreifhülsen in ihrem Außendurchmesser größer als die Spaltbreite des jeweiligen Fallschachtes ist.

Um beim Reinigen der Magnet stäbe zu gewährleisten, daß keine Fremdkörper in den Magnetscheider eindringen können, sind gemäß Figur 6 einseitig verschlossene Hülsen 45 vorgesehen, die jeweils so über einen Magnetstab geschoben werden können, daß sich ein dichter Abschluß gegenüber dem Innenraum des Magnetscheiders ergibt. Sodann kann der jeweilige Magnetstab 41' aus dem Magnetscheider herausgezogen und von den anhaftenden Partikeln gereinigt werden.

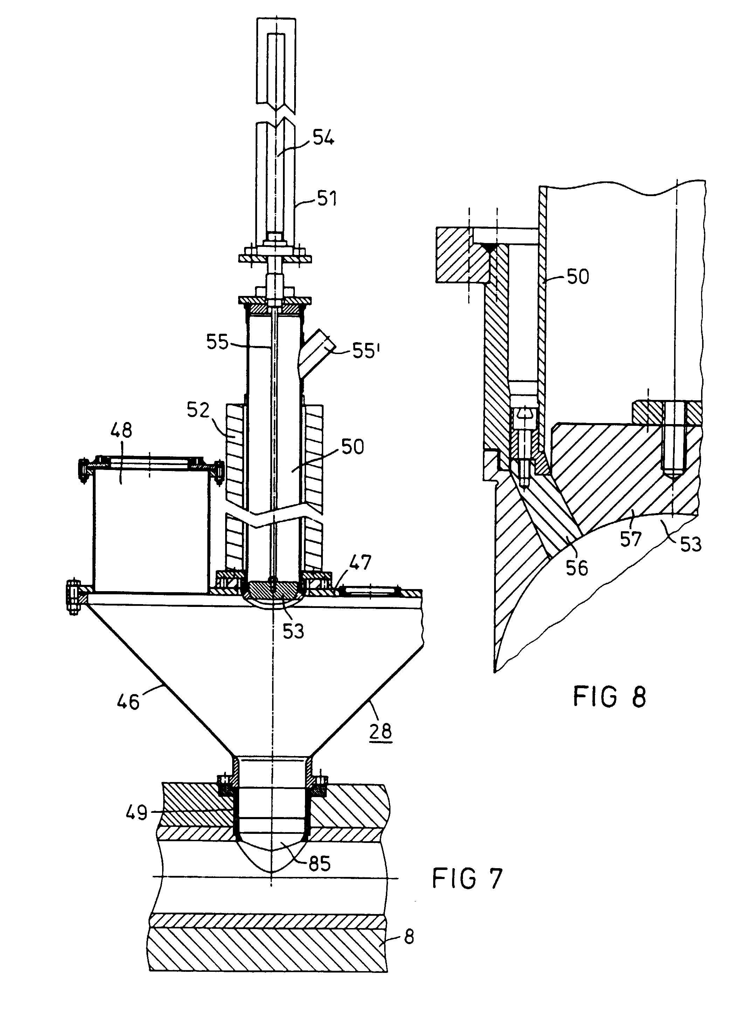

Vom Magnetscheider 6 gelangt das Polymergranulat über die flexible Rohrstrecke 27 (Figur 3) zu dem in Figur 7 dargestellten Einführungstrichter 28 des Extruders 8.

Der Einführungstrichter 28 ist in die Einfüllöffnung 85 des Extruders 8 dicht eingesetzt und besteht aus dem trichterartigen Teil 46, einem Deckel 47, einem außermittig angeordneten Zuführungsstutzen 48 für das Polymergranulat, dem Auslaßstutzen 49 und einem mittig angeordneten, axial verschiebbaren Einfüllrohr 50 für Reinigungsgranulat. Das verschiebbare Einfüllrohr 50 ist gegenüber dem Deckel 47 mit einem Faltenbalg 52 abgedichtet. Dem Einfüllrohr 50 ist ein Hubkolbenantrieb 51 zugeordnet, mit dem das Einfüllrohr 50 derart nach unten bewegt werden kann, daß sein unteres Ende in den Anschlußstutzen 49 hineinragt. Gemäß Figur 8 ist dabei am unteren Ende des Einfüllrohres 50 ein Dichtungsstück 53 vorgesehen, das aus einem äußeren Verschlußstück 56 und einem inneren Verschlußstück 57 besteht. Das äußere Verschlußstück 56 ist am unteren Ende des Einfüllrohres 50 befestigt, während das konzentrisch dazu angeordnete innere Verschlußstück 57 am Ende einer Hubstange 55 befestigt ist. Diese kann mittels eines Antriebes 54 in Achsrichtung des Einfüllrohres bewegt werden. Auf diese Weise kann das Verschlußstück 57 bis über die Einfüllöffnung 55' des Einfüllrohres 50 hochgefahren werden, um die Zufuhr von Reinigungsgranulat durch das Einfüllrohr 50 zu ermöglichen. - Die dem Innenraum des Extruders 8 zugekehrten Flächen der Verschlußstücke 56 und 57 sind an die Kontur der Innenwand des Extruderzylinders angepaßt.

Mittels der beschriebenen Anlage ist somit gewährleistet, daß das Polymergranulat im Bereich der vom Bodenauslaß 32 am Gebinde 21 bis zum Spritzkopf 5 des Extruders 8 reichenden Förderstrecke gegen den Zutritt von Fremdkörpern geschützt ist und daß das Polymergranulat, das aus hochreinen Granülen besteht, von möglichen Fremdkörperanteilen gereinigt wird.

## Patentansprüche

1. Verfahren zur Herstellung einer Isolierung aus vernetztem Polymer für Hoch- und Höchstspannungskabel, bei dem ein größeres Gebinde eines Polymergranulates spezifizierter Ausgangsqualität mit seiner Auslaßöffnung an eine Förderstrecke zum Zuführen des Granulates zu einem Extruder angekoppelt wird,
bei dem das Polymergranulat beim Durchlaufen der Förderstrekke zum Extruder mittels eines Windsichters und eines Magnetscheiders von Fremdstoffpartikeln gereinigt und über einen Einfülltrichter dem Extruder zugeführt wird
und bei dem das im Extruder mittels einer Schnecke spritztechnisch aufbereitete und mit einem Vernetzungsmittel angereicherte Polymer vor dem Spritzkopf des Extruders durch ein Siebpaket gedrückt und im Spritzkopf zur Kabelisolierung geformt und anschließend vernetzt wird,
**dadurch gekennzeichnet,**
daß das Polymermaterial auf dem gesamten Förderweg vom Vorratsraum (12) für das angelieferte Gebinde (20) bis zur Ausformung als Kabelisolierung mittels einer auf Luftreinheit kontrollierten Umgebung gegen den Zutritt von Verunreinigungen abgeschirmt wird,
daß das Polymergranulat im Bereich der Förderstrecke im wesentlichen vertikal von oben nach unten gefördert und dabei dosiert in die Förderstrecke eingegeben wird, wobei das Polymergranulat zunächst durch den Windsichter (25) und danach durch den Magnetscheider (26) geführt wird,
und daß das Polymergranulat dem Einfülltrichter (28) des Extruders außermittig zugeführt wird, um bei einem Wechsel der Extruderschnecke die Förderstrecke für das Polymergranulat im Bereich der Auslaßöffnung des Einfülltrichters absperren und eine zweite Förderstrecke für die Zuführung von Reinigungsgranulat eröffnen zu können.

2. Anlage zur Durchführung des Verfahrens nach Anspruch 1, bestehend aus einer Extrusionseinrichtung mit einem Extruder (8) zum Extrudieren einer vernetzbaren Polymermischung, wobei der Extrusionseinrichtung eine Einrichtung zum Zuführen eines elektrischen Leiters (1) vorgeschaltet und eine Einrichtung (9) zum Vernetzen des extrudierten Polymers und zum Aufwikkeln des mit dem vernetzten Polymer umhüllten Leiters nachgeschaltet ist und wobei der Einfüllöffnung des Extruders ein Förderweg zum Zuführen des zu extrudierenden Polymergranulates zugeordnet ist und dieser Förderweg einen Vorratsbereich (12) für die Gebinde (20) des Polymergranulats, eine Transporteinrichtung (21) zum Transportieren der Gebinde zur Eintrittsöffnung (32) der eigentlichen Förderstrecke und die eigentliche Förderstrecke für das rieselfähige Polymergranulat aufweist, wobei im Zuge dieser Förderstrecke ein Windsichter (25), ein Magnetscheider (26) und eine Rohrstrecke (27) zum Zuführen des Polymergranulats zum Einfülltrichter (28) des Extruders angeordnet sind,
**dadurch gekennzeichnet**,
daß der gesamte Förderweg und die Extrusionseinrichtung in einem Reinraum (10,12,14,15,16,17) der Klasse 100 000 angeordnet sind,
daß der Eintrittsbereich (15) der eigentlichen Förderstrecke, der Windsichter (25), der Magnetscheider (26) und die Rohrstrecke (27) oberhalb des Einfülltrichters (28) des Extruders (8) turmartig übereinander angeordnet sind, wobei
- zwischen der Eintrittsöffnung der eigentlichen Förderstrekke und dem Windsichter ein Zwischenbehälter (23) und eine dem Zwischenbehälter nachgeordnete Dosiervorrichtung (24) angeordnet sind,
- der Magnetscheider (26) mehrere nebeneinander angeordnete, vertikal ausgerichtete Scheideelemente (38) aufweist, die jeweils aus einem schachtartigen Gehäuseteil (39,40) bestehen, in dem wenigstens drei Magnetstabe (41) mit Abstand übereinander angeordnet sind,
- und der Einfülltrichter (28) einen außermittig angeordneten Zuführungsstutzen (48) für das Polymergranulat, ein mittig angeordnetes, axial verschiebbares Einfüllrohr (50) für Reinigungsgranulat und einen mittig angeordneten, axial verschiebbaren Verschlußstopfen (53) zum Verschließen der Austrittsöffnung des Einfülltrichters aufweist.

3. Anlage nach Anspruch 2,
**dadurch gekennzeichnet**,
daß der Eintrittsbereich (15) der eigentlichen Förderstrecke und der Extrusionsbereich (10) zusätzlich jeweils als Reinraum bzw. Reinzone der Klasse 1 000 ausgebildet sind.

4. Anlage nach Anspruch 2,
**dadurch gekennzeichnet,**
daß die Dosiervorrichtung (24) aus einem Vibrationsförderer besteht.

5. Anlage nach Anspruch 2,
**dadurch gekennzeichnet,**
daß jedes schachtartige Gehäuseteil des Magnetscheiders (26) oberhalb jedes Magnetstabes (41) einen Fallschacht (39,40) mit einem kanalartigen Schütttrichter (43,44) und im Bereich jedes Magnetstabes eine den Magnetstab (41) umgebende Durchgangskammer (42) für das Polymergranulat bildet,
wobei der Außendurchmesser (D) der Abstreifhülsen, mit denen die aus Permanentmagneten und Polscheiben aufgebauten Magnetstabe umgeben sind, größer als die Spaltbreite (S) des Fallschachtes ist.

6. Anlage nach Anspruch 2,
**dadurch gekennzeichnet,**
daß der Verschlußstopfen (53) aus zwei konzentrisch angeordneten Verschlußstücken (56,57) besteht, von denen das äußere am unteren Ende des Einfüllrohres (50) und das innere innerhalb des Einfüllrohres angeordnet und getrennt von diesem axial bewegbar ist,
und daß der Verschlußstopfen (53) in seiner Kontur der Wandung des Schneckengehäuses im Bereich der Einfüllöffnung (85) nachgebildet ist.

## Claims

1. Method for the manufacture of an insulation material consisting of cross-linked polymer for high-voltage and very high-voltage cables, where a fairly large bundle of a granulated polymer material of specified starting quality is coupled at its outlet opening to a conveyor section for supplying the granulated material to an extruder,
where the granulated polymer material, when passing through the conveyor section to the extruder, is cleaned of foreign body particles by means of an air separator and a magnetic separator and is supplied to the extruder by way of a funnel tube,
and where the polymer, which is prepared in the form of a spray in the extruder by means of a screw and is enriched with a cross-linking agent, is pressed through a screen pack in front of the spraying head of the extruder and in the spraying head is shaped into the cable insulation material and is subsequently cross-linked,
characterized in that the polymer material on the entire conveying route from the store room (12) for the delivered bundle (20) up to the shaping as cable insulation material is protected against the entry of impurities by means of an environment checked for air purity,
in that the granulated polymer material in the region of the conveyor section is conveyed substantially vertically from the top to the bottom and, in the process, is entered in a dosed manner into the conveyor section, with the granulated polymer material first of all being guided through the air separator (25) and thereafter through the magnetic separator (26),
and in that the granulated polymer material is supplied eccentrically to the funnel tube (28) of the extruder, to be able to block the conveying route for the granulated polymer material in the region of the outlet opening of the funnel tube when the extruder screw is changed and to be able to open a second conveyor section for the supply of granulated cleaning material.

2. Installation for carrying out the method according to claim 1, consisting of an extrusion device with an extruder (8) for extruding a cross-linkable polymer mixture, whereby a device for supplying an electrical conductor (1) is connected upstream of the extrusion device and a device (9) for cross-linking the extruded polymer and for taking up the conductor encased by the cross-linked polymer is connected downstream of the extrusion device, and whereby a conveying route for supplying the granulated polymer material to be extruded is allocated to the feed opening of the extruder and this conveying route has a store area (12) for the bundles (20) of the granulated polymer material, a transport device (21) for transporting the bundles to the entry opening (32) of the actual conveyor section and the actual conveyor section for the flowable granulated polymer material, whereby in the course of this conveyor section there are arranged an air separator (25), a magnetic separator (26) and a tube section (27) for supplying the granulated polymer material to the funnel tube (28) of the extruder,
characterized in that the entire conveying route and the extrusion device are arranged in a clean room (10,12,14,15,16,17) of the class 100,000,
in that the entry area (15) of the actual conveyor section, the air separator (25), the magnetic separator (26) and the tube section (27) are arranged one above the other like a tower above the funnel tube (28) of the extruder (8), whereby
- between the entry opening of the actual conveyor section and the air separator there are arranged an intermediate vessel (23) and a dosing device (24) arranged downstream of the intermediate vessel,
- the magnetic separator (26) has several vertically aligned separating elements (38) arranged next to each other, each of which consists of a shaft-like housing part (39, 40), in which at least three magnetic bars (41) are arranged one above the other with clearance,
- and the funnel tube (28) has an eccentrically arranged supply connection piece (48) for the granulated polymer material, a centrally arranged, axially displaceable feed tube (50) for granulated cleaning material and a centrally arranged, axially displaceable sealing plug (53) for sealing the outlet opening of the funnel tube.

3. Installation according to claim 2,
characterized in that the entry area (15) of the actual conveyor section and the extrusion area (10) are additionally constructed in each case as a clean room and a clean zone of the class 1000.

4. Installation according to claim 2,
characterized in that the dosing device (24) consists of a vibroconveyor.

5. Installation according to claim 2,
characterized in that each shaft-like housing part of the magnetic separator (26) above each magnetic bar (41) forms a fall shaft (39, 40) with a channel-like delivery funnel (43, 44), and in the region of each magnetic bar forms a passage chamber (42), surrounding the magnetic bar (41), for the granulated polymer material,
with the outer diameter (D) of the stripping sleeves, which enclose the magnetic bars assembled from permanent magnets and pole discs, being larger than the gap width (S) of the fall shaft.

6. Installation according to claim 2,
characterized in that the sealing plug (53) consists of two concentrically arranged sealing parts (56, 57), of which the outer one is arranged at the lower end of the feed tube (50) and the inner one is arranged within the feed tube and is axially movable separately from it, and in that the sealing plug (53) has the same contour as the wall of the screw housing in the region of the feed opening (85).

## Revendications

1. Procédé de fabrication d'une isolation en polymère réticulé pour câbles haute et très haute tension, suivant lequel un récipient de relativement grande taille de granulat de polymère de qualité initiale spécifiée est accouplé par son ouverture d'évacuation à une section de transport pour apporter le granulat à une extrudeuse,
suivant lequel le granulat de polymère est, sur la section de transport menant à l'extrudeuse, débarassé des particules de corps étrangers au moyen d'un séparateur pneumatique et d'un séparateur magnétique, et apporté à l'extrudeuse au moyen d'une trémie de remplissage,
et suivant lequel le polymère, traité dans l'extrudeuse au moyen d'une vis suivant la technique d'injection et enrichi d'un agent de réticulation, est comprimé par un paquet de filtres avant la tête d'injection de l'extrudeuse et moulé dans la tête d'injection sous la forme de l'isolation pour câbles, puis réticulé,
**caractérisé** en ce que le matériau polymère est, sur la totalité du parcours de transport depuis le local (12) d'entreposage du récipient (20) livré jusqu'à son démoulage sous la forme d'isolation pour câbles, protégé de la pénétration d'impuretés au moyen d'un environnement dont la pureté de l'air est contrôlée,
en ce que le granulat de polymère est, dans la région de la section de transport, transporté essentiellement verticalement de haut en bas et alimenté de façon dosée dans la section de transport, le granulat de polymère passant d'abord par le séparateur (25) pneumatique puis par le séparateur (26) magnétique,
et en ce que le granulat de polymère est apporté de façon excentrée à la trémie (28) de remplissage de l'extrudeuse, afin de pouvoir, lors d'un remplacement de la vis d'extrudeuse, fermer la section de transport pour le granulat de polymère dans la région de l'ouverture d'évacuation de la trémie de remplissage, et ouvrir une deuxième section de transport pour l'apport de granulat de nettoyage.

2. Installation pour la mise en oeuvre du procédé suivant la revendication 1, constituée d'un dispositif d'extrusion comprenant une extrudeuse (8) pour extruder un mélange polymère réticulable, le dispositif d'extrusion étant précédé d'un dispositif pour apporter un conducteur (1) électrique et suivi d'un dispositif (9) pour réticuler le polymère extrudé et enrouler le conducteur enrobé du polymère réticulé, et un parcours de transport pour apporter le granulat de polymère à extruder étant associé à l'ouverture de remplissage de l'extrudeuse et ce parcours de transport comportant un local (12) d'entreposage pour les récipients (20) de granulat de polymère, un dispositif (21) transporteur pour transporter les récipients à l'ouverture (32) d'entrée de la section de transport proprement dite et la section de transport proprement dite pour le granulat de polymère apte à l'écoulement, section de transport au cours de laquelle sont disposés un séparateur (25) pneumatique, un séparateur (26) magnétique et un tronçon (27) tubulaire pour apporter le granulat de polymère à la trémie (28) de remplissage de l'extrudeuse,
**caractérisée** en ce que l'ensemble du parcours de transport et le dispositif d'extrusion sont disposés dans une salle (10, 12, 14, 15, 16, 17) blanche de classe 100 000,
et en ce que la région (15) d'entrée de la section de transport proprement dite, le séparateur (25) pneumatique, le séparateur (26) magnétique et le tronçon (27) tubulaire sont superposés à la manière d'une tour au-dessus de la trémie (28) de remplissage de l'extrudeuse,
- un récipient (23) intermédiaire, suivi d'un dispositif (24) de dosage, étant disposés entre l'ouverture d'entrée de la section de transport proprement dite et le séparateur pneumatique,
- le séparateur (26) magnétique comprenant plusieurs éléments (38) séparateurs juxtaposés et disposés verticalement, qui sont constitués chacun d'une partie (39, 40) de carter du genre puits dans laquelle au moins trois barreaux (41) magnétiques sont superposés à distance entre eux,
- et la trémie (28) de remplissage comportant une tubulure (48) d'alimentation, disposée de façon excentrée, pour le granulat de polymère, un tube (50) de remplissage, disposé centralement et mobile axialement, pour du granulat de nettoyage, et un bouchon (53) de fermeture, disposé centralement et mobile axialement, pour fermer l'ouverture de sortie de la trémie de remplissage.

3. Installation suivant la revendication 2, **caractérisée** en ce que la région (15) d'entrée de la section de transport proprement dite et la région (10) d'extrusion sont en plus respectivement conçues comme salle ou encore zone blanche de classe 1 000.

4. Installation suivant la revendication 2, **caractérisée** en ce que le dispositif (24) de dosage consiste en un transporteur vibrant.

5. Installation suivant la revendication 2, **caractérisée** en ce que chaque partie de carter du genre puits du séparateur (26) magnétique forme, au-dessus de chaque barreau (41) magnétique, un puits (39, 40) de descente pourvu d'une trémie (43, 44) de déversement du genre canal, et, dans la région de chaque barreau magnétique, une chambre (42) de passage pour le granulat de polymère, chambre qui entoure le barreau (41) magnétique,
le diamètre (D) extérieur des manchons racleurs, qui entourent les barreaux magnétiques constitués d'aimants permanents et de disques polaires, étant supérieur à la largeur (S) de passage du puits de descente.

6. Installation suivant la revendication 2, **caractérisée** en ce que le bouchon (53) de fermeture est constitué de deux éléments (56, 57) de fermeture disposés concentriquement, parmi lesquels l'élément extérieur est disposé à l'extrémité inférieure du tube (50) de remplissage, et l'élément intérieur est disposé à l'intérieur du tube de remplissage et mobile axialement séparément de ce tube,
et en ce que le contour du bouchon (53) de fermeture reproduit la paroi du carter de vis dans la région de l'ouverture (85) de remplissage.
